(19)

Europäisches Patentamt

European Patent Office

Office européen des brevets

(11) **EP 4 723 446 A1**

(12) **EUROPEAN PATENT APPLICATION**

(43) Date of publication:
08.04.2026 Bulletin 2026/15

(21) Application number: 25206363.1

(22) Date of filing: 02.10.2025

(51) International Patent Classification (IPC):
*H02K 15/121* (2025.01)    *H02K 51/00* (2006.01)
*H02K 15/021* (2025.01)    *H02K 49/10* (2006.01)
*H02K 15/40* (2025.01)

(52) Cooperative Patent Classification (CPC):
**H02K 1/246; H02K 15/021; H02K 15/022;**
**H02K 15/121; H02K 15/16; H02K 49/102;**
H02K 15/40

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 04.10.2024 JP 2024174936

(71) Applicant: **Sumitomo Heavy Industries, Ltd.**
**Tokyo 141-6025 (JP)**

(72) Inventors:
• **NAKAGAWA, Hiroki**
  **Kanagawa, 237-8555, (JP)**
• **YAMAMOTO, Taizo**
  **Kanagawa, 237-8555, (JP)**
• **MINARI, Takahiro**
  **Kanagawa, 237-8555, (JP)**

(74) Representative: **Louis Pöhlau Lohrentz**
**Patentanwälte**
**Postfach 30 55**
**90014 Nürnberg (DE)**

(54) **MAGNETIC MODULATOR, MAGNETIC MODULATION GEAR, AND METHOD FOR MANUFACTURING MAGNETIC MODULATOR**

(57)     A position of a magnetic pole piece (54a) in an axial direction is easily managed. A magnetic modulator (50) includes the magnetic pole piece (54a), an output shaft portion (51) and a bearing support ring (55) which are disposed in the axial direction of the magnetic pole piece (54a) to rotationally support the magnetic pole piece (54a), and a resin portion (56) that integrates the magnetic pole piece (54a), the output shaft portion (51), and the bearing support ring (55). At least one of both end surfaces (54c) in the axial direction of the magnetic pole piece (54a) is exposed. In this manner, an axial position of an end surface (54c) of the exposed magnetic pole piece (54a) can be directly measured.

FIG. 3

**Description**

BACKGROUND OF THE INVENTION

Field of the Invention

The present invention relates to a magnetic modulator, a magnetic modulation gear, and a method for manufacturing a magnetic modulator.

Description of Related Art

In the related art, a magnetic modulation gear is known in which a magnetic modulator having a plurality of magnetic pole pieces is disposed between two magnet rotors disposed on inner and outer peripheries to modulate a magnetic flux distribution between the two magnet rotors (for example, refer to Japanese Patent No. 5350438).

In the magnetic modulator, the magnetic pole piece and a support portion for rotationally supporting the magnetic pole piece are integrated with each other by a resin. The support portion is disposed in the axial direction of the magnetic pole piece, and an end surface of the magnetic pole piece in the axial direction is connected to the support portion via the resin.

SUMMARY OF THE INVENTION

However, in the magnetic modulator, the end surface of the magnetic pole piece in the axial direction is covered with the resin. Consequently, it is difficult to manage a relative axial position between magnets disposed on inner and outer peripheries thereof and the magnetic pole piece. When an axial position between the magnetic pole piece and the magnets deviates, a torque is reduced due to a leakage magnetic flux, a thrust force directed to a magnetic stable position is generated, and performance deteriorates.

In view of the above-described circumstances, the present invention aims to easily manage an axial position of a magnetic pole piece.

According to an aspect of the present invention, there is provided a magnetic modulator including a magnetic pole piece, a support portion disposed in an axial direction of the magnetic pole piece to rotationally support the magnetic pole piece, and a resin portion that integrates the magnetic pole piece and the support portion. At least one of both end surfaces of the magnetic pole piece in the axial direction is exposed.

According to the present invention, it is possible to easily manage an axial position of a magnetic pole piece.

BRIEF DESCRIPTION OF THE DRAWINGS

Fig. 1 is a sectional view of a magnetic modulation gear according to an embodiment.
Fig. 2 is a sectional view taken along line III-III in Fig. 1.
Fig. 3 is a sectional view of a magnetic modulator according to the embodiment.
Fig. 4 is a sectional view of a modification example of the magnetic modulator according to the embodiment.
Fig. 5 is a view when a modification example of the magnetic modulator according to the embodiment is viewed from an output side.
Fig. 6 is a flowchart showing a schematic manufacturing process of the magnetic modulator according to the embodiment.
Fig. 7 is a sectional view showing a state where a magnetic pole piece or the like is disposed in a molding die when a resin portion is molded.

DETAILED DESCRIPTION OF THE INVENTION

Hereinafter, an embodiment according to the present invention will be described in detail with reference to the drawings.

Entire Configuration of Magnetic Modulation Gear

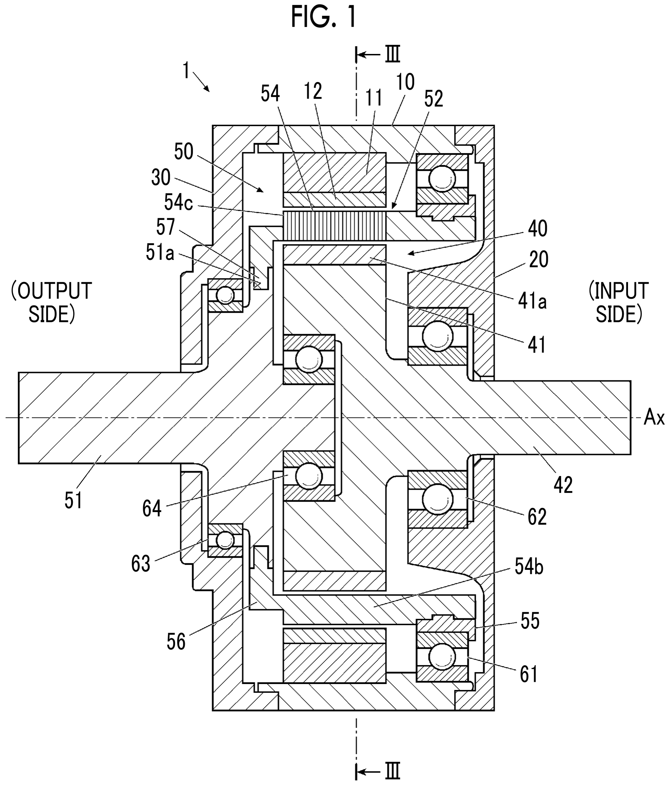

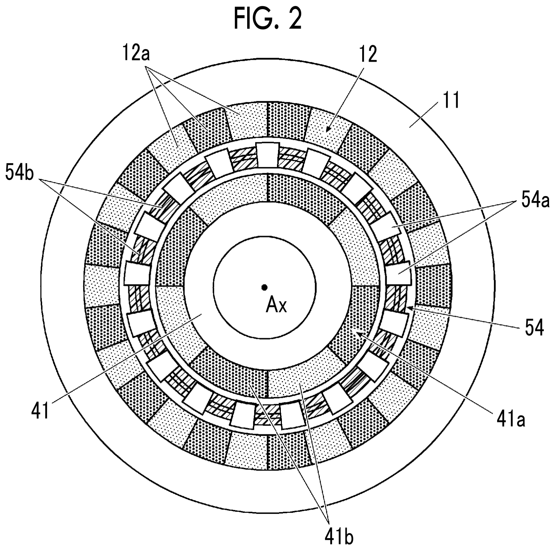

Fig. 1 is a sectional view of a magnetic modulation gear 1 according to the present embodiment, and Fig. 2 is a sectional view taken along line III-III in Fig. 1.

In the following description, a direction along a center axis Ax of the magnetic modulation gear 1 will be referred to as an "axial direction", a direction perpendicular to the center axis Ax will be referred to as a "radial direction", and a rotation direction around the center axis Ax will be referred to as a "circumferential direction". In addition, in the axial direction, a side connected to an external driven member (left side in Fig. 1) will be referred to as an "output side", and a side opposite thereto (right side in Fig. 1) will be referred to as an "input side".

As shown in Figs. 1 and 2, the magnetic modulation gear 1 according to the present embodiment includes a casing (frame) 10, an input-side cover 20 and an output-side cover 30 which cover both sides of the casing 10 in the axial direction, and an input shaft 40 and a magnetic modulator 50 in which main portions are accommodated inside the input-side cover 20 and the output-side cover 30.

The casing 10 is formed in a substantially cylindrical shape around the center axis Ax, and includes a stator yoke 11 and an outer magnetic pole body 12 on an inner peripheral portion thereof.

The stator yoke 11 is formed in a cylindrical shape, and is fitted into the casing 10.

The outer magnetic pole body 12 is formed by a plurality of outer magnets 12a. For example, the plurality of outer magnets 12a are permanent magnets such as neodymium magnets, have the number of pole pairs more than the number of inner magnets 41b of an input shaft 40 (to be described later), and are attached to an inner peripheral surface of the stator yoke 11 such that the outer magnets 12a having different polarities are alternately disposed in the circumferential direction. However, the outer magnetic pole body 12 may have a shape of an integrated ring, or may have a shape in which the divided outer magnets 12a are aligned in the circumferential direction.

In addition, a bearing 61 (for example, a ball bearing) which rotatably supports the magnetic modulator 50 is disposed on an input side with respect to the stator yoke 11 in an inner peripheral portion of the casing 10.

The input-side cover 20 is disposed on the input side of the casing 10, and covers an inner opening of the casing 10 from the input side. An outer peripheral portion of the input-side cover 20 is fitted to the casing 10 by a spigot joint. In addition, a bearing 62 (for example, a ball bearing) which rotatably supports the input shaft 40 is disposed in an inner peripheral portion of the input-side cover 20.

The output-side cover 30 is disposed on an output side of the casing 10, and covers the inner opening of the casing 10 from the output side. An outer peripheral portion of the output-side cover 30 is fitted to the casing 10 by a spigot joint. In addition, a bearing 63 (for example, a ball bearing) which rotatably supports the magnetic modulator 50 is disposed in an inner peripheral portion of the output-side cover 30.

The input shaft 40 is a shaft rotating around the center axis Ax, and includes a disk portion 41 and a motor connection portion 42. The input shaft 40 is rotatably supported by the bearing 62 disposed between the input-side cover 20 and the input shaft 40 and a bearing 64 disposed between the magnetic modulator 50 and the input shaft 40.

The motor connection portion 42 extends from the disk portion 41 to the input side in the axial direction. A tip side of the motor connection portion 42 protrudes outward from the input-side cover 20, and this protrusion portion is connected to a motor (not shown).

An outer peripheral portion of the disk portion 41 includes an inner magnetic pole body 41a disposed on a radially inner side of the outer magnetic pole body 12. The inner magnetic pole body 41a is formed by a plurality of inner magnets 41b. For example, the plurality of inner magnets 41b are permanent magnets such as a neodymium magnet, and are attached to an outer peripheral surface of the disk portion 41 such that the inner magnets 41b having different polarities are alternately disposed in the circumferential direction. However, the inner magnetic pole body 41a may have a shape of an integrated ring, or may have a shape in which the divided inner magnets 41b are aligned in the circumferential direction.

Configuration of Magnetic Modulator

As shown in Figs. 1 and 2, the magnetic modulator 50 includes an output shaft portion 51, a cylindrical portion 52, and a bearing support ring 55. Among these, the output shaft portion 51 and the bearing support ring 55 are examples of a support portion according to the present invention, and are portions for rotationally supporting an intermediate magnetic pole body 54 (magnetic pole piece 54a) (to be described later).

The output shaft portion 51 is a metal shaft that rotates around the center axis Ax, and is disposed on the output side of the intermediate magnetic pole body 54 (to be described later). In the output shaft portion 51, approximately half on the output side half protrudes outward from the output-side cover 30, and this protrusion portion is connected to a driven member (not shown).

A substantially central portion of the output shaft portion 51 in the axial direction is rotatably supported by the bearing 63 disposed between the output-side cover 30 and the output shaft portion 51. In addition, the bearing 64 (for example, a ball bearing) which rotatably supports the input shaft 40 is disposed in an end portion on the input side of the output shaft portion 51. An end portion on the output side of the cylindrical portion 52 is connected to an outer peripheral portion at the axial position between the bearings 63 and the bearing 64 in the output shaft portion 51.

The bearing support ring 55 is made of a metal (for example, stainless steel), and is disposed on the input side of the intermediate magnetic pole body 54 (to be described later). The bearing support ring 55 is fixed to an outer peripheral side of an end portion on the input side of the cylindrical portion 52, and an inner ring of the bearing 61 disposed between the bearing support ring 55 and the casing 10 is fitted to an outer peripheral surface.

The cylindrical portion 52 is formed in a substantially cylindrical shape around the center axis Ax, and includes the intermediate magnetic pole body 54 disposed at the axial position corresponding to the outer magnetic pole body 12 and the inner magnetic pole body 41a. The intermediate magnetic pole body 54 includes a plurality of magnetic pole pieces 54a.

The plurality of magnetic pole pieces 54a are disposed at a predetermined interval in the circumferential direction, and are formed in a ring shape as a whole. The plurality of magnetic pole pieces 54a (intermediate magnetic pole body 54) are disposed concentrically with a predetermined gap therebetween, on the radially inner side of the outer magnetic pole body 12 and on a radially outer side of the inner magnetic pole body 41a. Each of the magnetic pole pieces 54a has a configuration in which thin electromagnetic steel sheets (laminated steel sheets) are laminated in the axial direction.

The magnetic pole pieces 54a adjacent to each other in the circumferential direction are connected to each other by a connection portion 54b provided therebetween.

The connection portion 54b is made of a resin, and forms a portion of a resin portion 56 (to be described later).

An outer peripheral surface of the connection portion 54b is recessed to the radially inner side with respect to an outer peripheral surface of the magnetic pole piece 54a.

However, the inner peripheral surface and the outer peripheral surface of the connection portion 54b may be flush with the inner peripheral surface and the outer peripheral surface of the magnetic pole piece 54a, or the inner peripheral surface of the connection portion 54b may be recessed to the radially outer side.

In addition, the connection portion 54b and the magnetic pole piece 54a may be integrally formed of electromagnetic steel sheets. In this case, a position and a width of the connection portion 54b in the radial direction are not particularly limited, but may be configured to obtain preferable torque performance, for example, as disclosed in International Publication No. 2023/026804.

A portion excluding the magnetic pole piece 54a in the cylindrical portion 52 is a resin portion 56 formed of a resin (for example, super engineering plastic). That is, the portion excluding the output shaft portion 51, the bearing support ring 55, and the intermediate magnetic pole body 54 (plurality of magnetic pole pieces 54a) in the magnetic modulator 50 is the resin portion 56. A space between the plurality of magnetic pole pieces 54a is filled with the resin, and this space forms the above-described connection portion 54b.

An end portion on the output side in the resin portion 56 protrudes to the radially inner side, and is connected to the output shaft portion 51. A plurality of protrusion portions 57 protruding toward the radially inner side are arranged in the circumferential direction on an inner peripheral portion of the end portion. The plurality of protrusion portions 57 are molded to correspond to a plurality of recessed portions 51a on an outer peripheral surface of the output shaft portion 51, and the output shaft portion 51 and the cylindrical portion 52 (resin portion 56) are firmly fixed to each other by engagement between the protrusion portions 57 and the recessed portions 51a. In this manner, a mutual movement of the output shaft portion 51 and the cylindrical portion 52 in the radial direction and the axial direction is suppressed.

An end portion on the input side in the resin portion 56 supports the bearing support ring 55 in the outer peripheral portion.

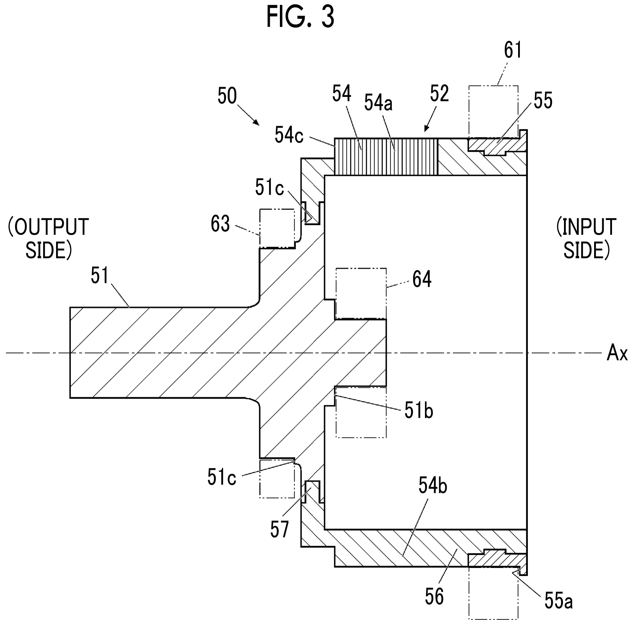

Fig. 3 is a sectional view of the magnetic modulator 50 alone.

As shown in the drawing, a portion located on the output side of the intermediate magnetic pole body 54 (magnetic pole piece 54a) in the resin portion 56 exposes the end surface 54c on the output side of the magnetic pole piece 54a over the entire periphery. Therefore, a measuring instrument is brought into contact with the exposed end surface 54c. In this manner, the axial position of the end surface 54c can be directly measured. In this manner, a relative axial position of the intermediate magnetic pole body 54 (magnetic pole piece 54a) with respect to the outer magnetic pole body 12 and the inner magnetic pole body 41a can be more accurately managed.

Here, the relative axial position of the intermediate magnetic pole body 54 with respect to the inner magnetic pole body 41a is defined by an axial dimension between a shoulder surface 51b against which an inner ring of the bearing 64 supporting the input shaft 40 abuts and the end surface 54c of the magnetic pole piece 54a. In addition, the relative axial position of the intermediate magnetic pole body 54 with respect to the outer magnetic pole body 12 is defined by an axial dimension between a shoulder surface 55a against which an inner ring of the bearing 61 abuts or a shoulder surface 51c against which an inner ring of the bearing 63 abuts and the end surface 54c of the magnetic pole piece 54a. The axial position of the intermediate magnetic pole body 54 may be adjusted by processing the shoulder surface as necessary or by inserting a shim during assembly. However, the axial dimension is a dimension in the magnetic modulator 50 alone, and as a matter of course, the axial position of outer rings of the bearings 61 to 64 affects the relative axial position of the magnetic modulator 50. The axial position of the intermediate magnetic pole body 54 may be adjusted as appropriate in view of the axial position of the outer rings of the bearings 61 to 64.

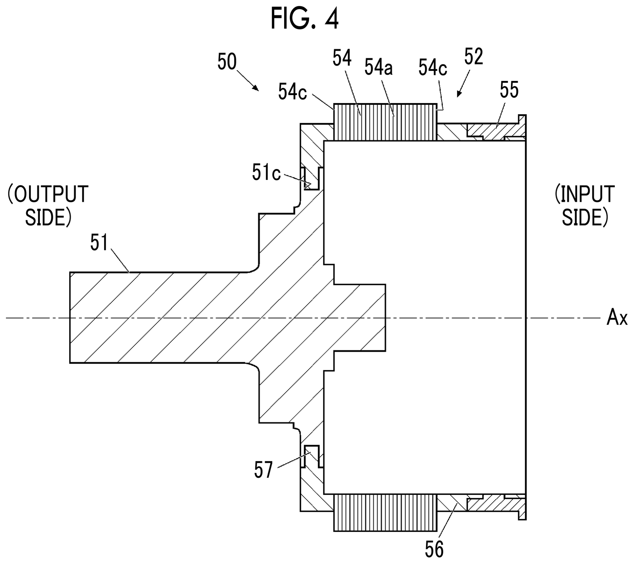

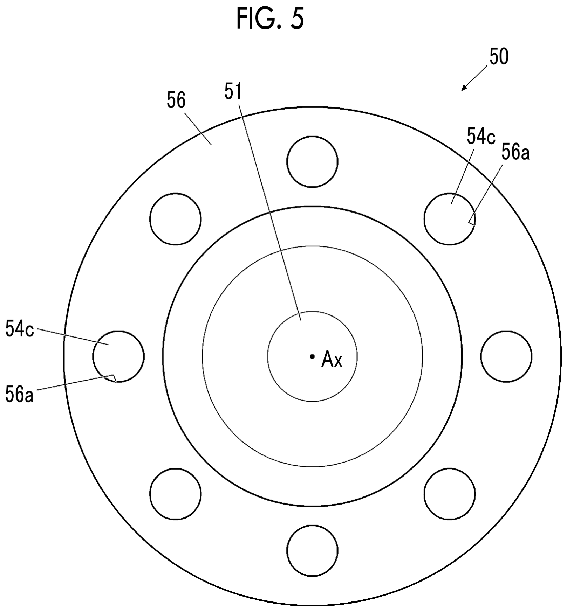

In the magnetic pole piece 54a, at least one of both end surfaces in the axial direction may be exposed. For example, as shown in Fig. 4, both end surfaces 54c and 54c of the magnetic pole piece 54a in the axial direction may be exposed. Alternatively, as shown in Fig. 5, only a portion of the end surface 54c of the magnetic pole piece 54a in the circumferential direction may be exposed. In an example in Fig. 5, the end surface 54c of the magnetic pole piece 54a is exposed on the output side through a plurality of hole portions 56a formed in the resin portion 56. For example, the plurality of hole portions 56a are circular holes having a size into which a measuring probe can be easily inserted in the axial direction, and are disposed in an equal interval in the circumferential direction.

In addition, it is desirable that a portion of the end surface 54c of the magnetic pole piece 54a in the axial direction is exposed on an outer peripheral side rather than an inner peripheral side, in terms of easy measurement of the portion. Specifically, when the portion on the outer peripheral side is exposed, an area of the portion serving as a measurement target is increased, and a surrounding work space can be widely secured (easy work). It is difficult to measure the portion when the portion on the inner peripheral side is slightly exposed. In addition, for example, when a portion on the radially inner side in the end surface on the input side is exposed, in order to measure the axial dimension between the end surface and the shoulder surface on the radially outer side (for example, the shoulder surface 51c), a distance between the two surfaces cannot be directly measured by the measuring instrument, and the distance is indirectly measured via a reference position on the input side with respect to the magnetic modulator 50. Therefore, there is a possibility that an error increases.

In addition, the description that the end surface 54c of the magnetic pole piece 54a is "exposed" means that the end surface 54c is not covered with a resin (resin portion 56) that integrates the magnetic pole piece 54a and the support portion (output shaft portion 51 and bearing support ring 55). Therefore, for example, since coating or the like of the magnetic pole piece (electromagnetic steel sheet) is not included in the resin, the presence or absence of the coating or the like does not affect the "exposure" of the end surface 54c according to the present embodiment.

Operation of Magnetic Modulation Gear

As shown in Figs. 1 and 2, in the magnetic modulation gear 1, when the input shaft 40 is rotated around the center axis Ax by a motor (not shown), a spatial magnetic flux waveform formed by the inner magnetic pole body 41a (inner magnet 41b) of the input shaft 40 is modulated to the same frequency as that of the outer magnetic pole body 12 (outer magnet 12a) by the intermediate magnetic pole body 54 (magnetic pole piece 54a). A rotation torque is transmitted to the magnetic modulator 50 by using a magnetic force between the intermediate magnetic pole body 54 and the outer magnetic pole body 12. In this way, a rotating motion input to the input shaft 40 is decelerated, and is output to a driven member (not shown) connected to the output shaft portion 51 of the magnetic modulator 50.

The intermediate magnetic pole body 54 may be fixed, and the outer magnetic pole body 12 may be provided in a rotatable low-speed rotor to output the rotating motion from the low-speed rotor.

Here, a reduction ratio R of the magnetic modulation gear 1 is expressed by Equation (1) below when the output shaft is the intermediate magnetic pole body 54, and is expressed by Equation (2) below when the output shaft is the outer magnetic pole body 12.

$$R = Np / Ni ... (1)$$

$$R = No / Ni ... (2)$$

Here, Np is the number of magnetic poles of the intermediate magnetic pole body 54 (the number of magnetic pole pieces 54a: the number of magnetic pole pieces), No is the number of pole pairs of the outer magnets 12a (the number of outer pole pairs), and Ni is the number of pole pairs of the inner magnetic pole body 41a (the number of inner pole pairs).

In addition, a relationship of Equation (3) below is established between the number Np of magnetic pole pieces, the number No of outer pole pairs, and the number Ni of inner pole pairs.

$$Np = Ni + No ... (3)$$

Manufacturing Process of Magnetic Modulator

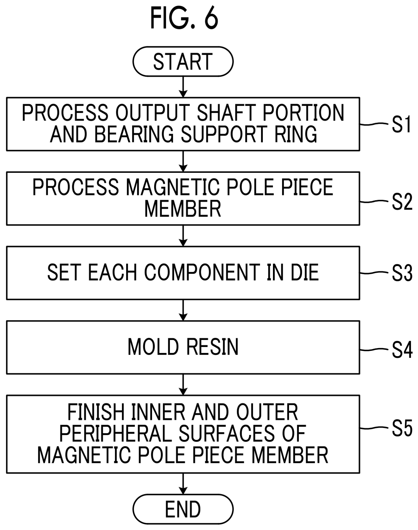

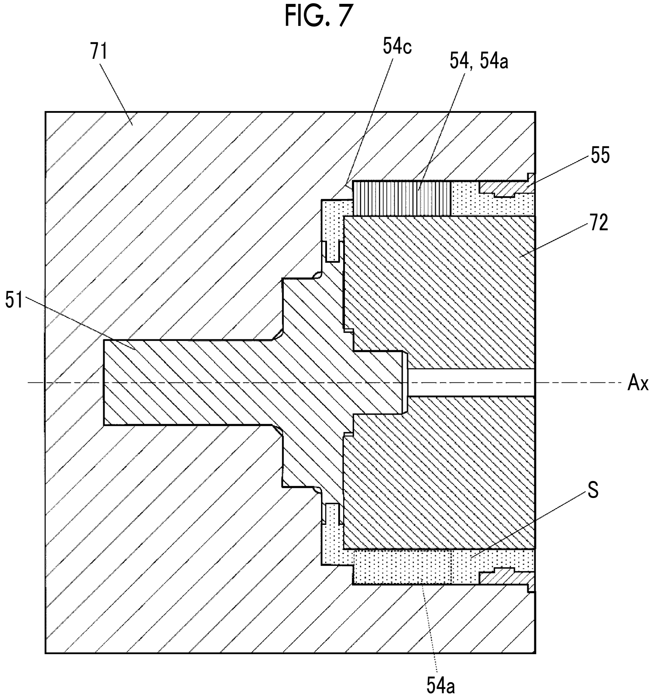

Fig. 6 is a flowchart showing a schematic manufacturing process of the magnetic modulator 50. Fig. 7 is a sectional view showing a state where the magnetic pole piece 54a or the like is disposed in a molding die when the resin portion 56 is molded.

As shown in Fig. 6, in the manufacturing process of the magnetic modulator 50, first, the output shaft portion 51 and the bearing support ring 55 are processed (Step S1). Here, both the output shaft portion 51 and the bearing support ring 55 are subjected to machine processing or the like to have a predetermined finished shape (in addition to the machine processing, necessary treatment such as heat treatment and surface treatment is included).

Next, the intermediate magnetic pole body 54 (magnetic pole piece 54a) is processed (Step S2). Here, one (or a plurality) of electromagnetic steel sheets is punched into a shape in a plan view of the magnetic pole piece 54a, and thereafter, the electromagnetic steel sheet is laminated by a predetermined axial length. In this manner, the magnetic pole piece 54a is manufactured. The magnetic pole piece 54a is manufactured in a required number. The magnetic pole piece 54a may be manufactured by wire cutting or other methods instead of punching.

Next, the output shaft portion 51, the bearing support ring 55, and the intermediate magnetic pole body 54 (a plurality of magnetic pole pieces 54a) which are manufactured in Steps S1 and S2 are disposed in a molding die for molding the resin portion 56 (Step S3: disposition step).

Specifically, as shown in Fig. 7, first, the output shaft portion 51, the bearing support ring 55, and the plurality of the magnetic pole pieces 54a are disposed in a first molding die 71 that defines a shape on the radially outer side. At this time, the first molding die 71 comes into contact with (abuts against) the end surface 54c on the output side of the magnetic pole piece 54a.

Thereafter, a second molding die 72 that defines a shape on the radially inner side is set on the input side of the output shaft portion 51.

Next, the first molding die 71 and the second molding die 72 in which the output shaft portion 51, the bearing support ring 55, and the plurality of magnetic pole pieces 54a are disposed are filled with the resin, and the resin portion 56 is molded (resin casting, injection molding, or the like) (Step S4: molding step).

Specifically, a filling space S indicated by dots in Fig. 7 is filled with the resin to mold the resin portion 56. The output shaft portion 51, the bearing support ring 55, and the plurality of magnetic pole pieces 54a are fixed to and integrated with each other by the resin portion 56.

In this case, the first molding die 71 has a portion in contact with the end surface 54c on the output side of the magnetic pole piece 54a. Therefore, a portion in contact with the first molding die 71 in the end surface 54c is exposed without being covered with the resin after the molding.

Next, the inner peripheral surface and the outer peripheral surface of the intermediate magnetic pole body 54 are finished (Step S5). Here, the inner peripheral surface and the outer peripheral surface of the intermediate magnetic pole body 54 are processed to have predetermined shape accuracy or the like by machine processing in a lathe or a polisher. In this manner, centering accuracy of the inner peripheral surface and the outer peripheral surface is improved, and a loss or a torque ripple is improved during an operation.

Here, at least one of the inner peripheral surface and the outer peripheral surface of the intermediate magnetic pole body 54 may be processed. In addition, the other portions may be processed. In addition, the processing here is not limited to the machine processing in the lathe or the polisher, and includes manual polishing or the like, for example. In addition, the processing in Step S5 may not be performed.

Technical Effect of Present Embodiment

As described above, according to the present embodiment, at least one of both end surfaces 54c in the axial direction in the magnetic pole piece 54a is exposed.

In this manner, the axial position of the exposed end surface 54c can be directly measured. Therefore, it is possible to easily manage the relative axial position of the magnetic pole piece 54a (intermediate magnetic pole body 54) with respect to the outer magnetic pole body 12 and the inner magnetic pole body 41a. As a result, assembly work of the magnetic modulation gear 1 can be facilitated, and performance deterioration caused by an axial deviation of the magnetic modulator 50 in the axial direction can be suppressed.

In addition, according to the present embodiment, both end surfaces 54c in the axial direction in the magnetic pole piece 54a may be exposed.

In this case, the axial positions of the both end surfaces 54c can be measured. Therefore, the axial position of the magnetic pole piece 54a can be more accurately managed, compared to when only one end surface 54c is exposed.

In addition, according to the present embodiment, the end surface 54c of the magnetic pole piece 54a may be exposed through the hole portion 56a of the resin portion 56.

In this case, an area of the exposed end surface 54c decreases, compared to when the end surface 54c is similarly exposed over the entire periphery. Therefore, although there is a possibility that the end surface 54c is no longer easily measured, compared to when the end surface 54c is exposed over the entire periphery, rigidity of the magnetic pole piece 54a held by the resin portion 56 can be improved.

Others

Hitherto, the embodiment of the present invention has been described. However, the present invention is not limited to the above-described embodiment.

For example, in the above-described embodiment, in the Step S3 (disposition step) of disposing the magnetic pole piece and the support portion in the molding die, at least one of both end surfaces of the magnetic pole piece in the axial direction is brought into contact with the molding die. In this manner, the end surface is exposed. That is, in the magnetic modulator according to the present embodiment, the end surface of the magnetic pole piece in the axial direction is exposed from the resin portion at a time point immediately after the molding step in Step S4. Therefore, the magnetic modulator in the present embodiment includes a configuration in which the exposed end surface of the magnetic pole piece is covered with another resin after the molding step. In this case, even when the resin portion molded in the molding step and the other resin added to cover the end surface are the same type, a reformed mark such as a boundary line is formed. Therefore, it is conceivable that both are identifiable.

Alternatively, details in the above-described embodiment can appropriately be changed within the scope not departing from the concept of the invention.

Brief Description of the Reference Symbols

    1 Magnetic modulation gear
    12 Outer magnetic pole body
    12a Outer magnet
    41a Inner magnetic pole body
    41b Inner magnet
    50 Magnetic modulator
    51 Output shaft portion (support portion)
    54 Intermediate magnetic pole body
    54a Magnetic pole piece
    54b Connection portion
    55 Bearing support ring (support portion)
    56 Resin portion
    56a Hole portion
    71 First molding die
    72 Second molding die
    Ax Center axis
    S Filling space

**Claims**

1. A magnetic modulator (50) comprising:

   a magnetic pole piece (54a);
   a support portion (51, 55) disposed in an axial direction of the magnetic pole piece (54a) to rotationally support the magnetic pole piece (54a); and
   a resin portion (56) that integrates the magnetic pole piece (54a) and the support portion (51, 55),
   wherein at least one of both end surfaces (54c) of the magnetic pole piece (54a) in the axial direction is exposed.

2. The magnetic modulator (50) according to claim 1, wherein both end surfaces (54c) of the magnetic pole piece (54a) in the axial direction are exposed.

3. The magnetic modulator (50) according to claim 1,

   wherein the resin portion (56) includes a hole portion (56a) formed in the axial direction, and
   at least one of both end surfaces (54c) of the magnetic pole piece (54a) in the axial direction is exposed through the hole portion (56a).

4. A magnetic modulation gear (1) comprising:

   the magnetic modulator (50) according to any one of claims 1 to 3;
   an input shaft (40) disposed on a radially inner side of the magnetic modulator (50) and including a plurality of inner magnets (41b) arranged in a circumferential direction; and
   a plurality of outer magnets (12a) disposed on a radially outer side of the magnetic modulator (50) and arranged in the circumferential direction.

5. A method for manufacturing a magnetic modulator (50), comprising:

   a disposition step of disposing a magnetic pole piece (54a) and a support portion (51, 55) for rotationally supporting the magnetic pole piece (54a) in a molding die (71, 72); and
   a molding step of filling the molding die (71, 72) in which the magnetic pole piece (54a) and the support portion (51, 55) are disposed, with a resin, and molding a resin portion (56) that integrates the magnetic pole piece (54a) and the support portion (51, 55),
   wherein in the disposition step, at least one of both end surfaces (54c) of the magnetic pole piece (54a) in an axial direction is brought into contact with the molding die (71, 72).

# FIG. 1

# FIG. 2

# FIG. 3

# FIG. 4

(OUTPUT SIDE)

(INPUT SIDE)

Ax

FIG. 5

# FIG. 6

```
┌─────────────┐
│    START    │
└─────────────┘
       │
       ▼
┌──────────────────────────────┐
│ PROCESS OUTPUT SHAFT PORTION  │──── S1
│ AND BEARING SUPPORT RING      │
└──────────────────────────────┘
       │
       ▼
┌──────────────────────────────┐
│ PROCESS MAGNETIC POLE PIECE   │──── S2
│ MEMBER                        │
└──────────────────────────────┘
       │
       ▼
┌──────────────────────────────┐
│ SET EACH COMPONENT IN DIE     │──── S3
└──────────────────────────────┘
       │
       ▼
┌──────────────────────────────┐
│ MOLD RESIN                    │──── S4
└──────────────────────────────┘
       │
       ▼
┌──────────────────────────────┐
│ FINISH INNER AND OUTER        │──── S5
│ PERIPHERAL SURFACES OF        │
│ MAGNETIC POLE PIECE MEMBER    │
└──────────────────────────────┘
       │
       ▼
┌─────────────┐
│     END     │
└─────────────┘
```

## FIG. 7

Europäisches
Patentamt

European
Patent Office

Office européen
des brevets

# EUROPEAN SEARCH REPORT

**Application Number**

EP 25 20 6363

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 261 238 A1 (GOODRICH ACTUATION SYSTEMS LTD [GB]) 27 December 2017 (2017-12-27) | 1,2,4 | INV. H02K15/121 H02K51/00 H02K15/021 H02K49/10 H02K15/40 |
| Y | * abstract; figures 1,2,3A,3B * | 5 | |
| A | * paragraph [0037] - paragraph [0060] * ----- | 3 | |
| Y | EP 4 391 333 A1 (SUMITOMO HEAVY INDUSTRIES [JP]) 26 June 2024 (2024-06-26) * abstract; figures 1,2,4 * * paragraph [0040] - paragraph [0044] * ----- | 5 | |

**TECHNICAL FIELDS SEARCHED (IPC)**

H02K

The present search report has been drawn up for all claims

| Place of search | Date of completion of the search | Examiner |
|---|---|---|
| Munich | 4 February 2026 | Zeng, Wenyan |

EPO FORM 1503 03.82 (P04C01)

## ANNEX TO THE EUROPEAN SEARCH REPORT
## ON EUROPEAN PATENT APPLICATION NO.

EP 25 20 6363

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2026

| Patent document cited in search report | | Publication date | Patent family member(s) | | Publication date |
|---|---|---|---|---|---|
| EP 3261238 | A1 | 27-12-2017 | EP | 3261238 A1 | 27-12-2017 |
| | | | US | 2017373582 A1 | 28-12-2017 |
| | | | US | 2020295648 A1 | 17-09-2020 |
| | | | US | 2022416640 A1 | 29-12-2022 |
| EP 4391333 | A1 | 26-06-2024 | EP | 4391333 A1 | 26-06-2024 |
| | | | JP | WO2023021977 A1 | 23-02-2023 |
| | | | US | 2024195279 A1 | 13-06-2024 |
| | | | WO | 2023021977 A1 | 23-02-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5350438 B

- WO 2023026804 A